# EUROPÄISCHE PATENTSCHRIFT

(11) **EP 1 632 834 B1**
(45) Veröffentlichungstag und Bekanntmachung des Hinweises auf die Patenterteilung: **07.11.2007**
(21) Anmeldenummer: 05104691.0
(22) Anmeldetag: 31.05.2005
(51) Int. Cl.: G06F 21/22

(54) **Verfahren zur Steuerung des Zugriffs auf ein Anwendungsprogramm**
Method for access control to an application program
Méthode de contrôle d'accès à un programme d'application

(30) Priorität: 01.09.2004 EP 04020791
(43) Veröffentlichungstag der Anmeldung: 08.03.2006
(73) Patentinhaber: Agenda Informationssysteme GmbH, 83026 Rosenheim (DE)
(72) Erfinder: KAPPEL, Manfred, 83109, Grosskarolinenfeld (DE); JODOIN, Rainer, 83052, Bruckmuehl (DE)
(74) Vertreter: Esslinger, Alexander

(56) Entgegenhaltungen:
- EP-A- 0 818 748
- EP-A- 1 072 979
- GB-A- 2 378 529
- US-A- 4 658 093
- US-A1- 2002 120 726
- US-A1- 2002 144 124
- US-A1- 2004 133 801

## Beschreibung

### Technisches Gebiet

Die Erfindung betrifft die Steuerung des Zugriffs auf ein auf einem Computer oder Computernetzwerk ablaufenden Anwendungsprogramm.

### Verwandter Stand der Technik

Für die zeitliche oder nutzungsabhängige Bereitstellung von Software von einem Softwareanbieter für einen Benutzer ist es erforderlich, Verfahren zu entwickeln, die den Zugriff auf ein Anwendungsprogramm in Abhängigkeit von bestimmten äußeren Bedingungen wie beispielsweise der Laufzeit des Programms, dem jeweiligen Nutzer usw. zu steuern.

Es sind verschiedene ASP (Application Service Providing)-Lösungen bekannt, bei denen ein Benutzer von seinem Client-Computer über das Internet Zugriff auf eine Computeranwendung hat, die auf einem entfernten Server-Computer gespeichert ist. Am Server kann so der Zugriff zeitabhängig oder nutzerabhängig beispielsweise gemäß einem vorher vereinbarten Nutzungstarif gewährt werden. Derartige ASP-Lösungen haben jedoch den Nachteil, dass die Verfügbarkeit der Anwendung von der Verfügbarkeit des Internetzugangs abhängig ist. Viele Softwareanwender bevorzugen daher ein lokal auf ihrem Computer ablaufendes Programm.

Ein weiterer Nachteil der ASP-Lösungen liegt darin, dass Daten über das Internet übertragen und beim Service-Provider am Server gespeichert werden müssen. Insbesondere für vertrauliche und sensible Daten wie beispielsweise Finanzdaten, interne Firmendaten etc. wirft das ASP-Modell daher erhebliche Sicherheitsprobleme auf. Diese können zwar durch entsprechende verschlüsselte Datenübertragung zwischen Provider-Server und Benutzer-Client gelöst werden, was aber den Aufwand erhöht und die Benutzerfreundlichkeit der Anwendung beeinträchtigt.

Weiterhin ist es bekannt, Software mit einem Schutzmodul oder Dongle auszuliefern, welches den Zugriff beispielsweise auf einen oder eine bestimmte Anzahl von Arbeitsplatzrechnern beschränkt. Derartige Software-Schutzmodule sind jedoch umständlich in ihrer Anwendung und werden häufig vom Anwender nicht akzeptiert.

Schließlich sind Zugriffssteuersysteme bekannt, bei denen mittels einer Zeitsteuerung der Zugriff auf eine festgelegte Zeit, beispielsweise drei Monate beschränkt ist. Nach Ablauf dieser Zeitdauer wird der Zugriff auf das Anwendungsprogramm gesperrt.

Die EP 0 818 748 A2 beschreibt ein Softwaremanagementverfahren, bei dem entsprechend einer Benutzung der Software ein Zählerwert heruntergezählt wird und bei Ablauf eines vorgegebenen Zeitguthabens der Programmablauf unterbrochen wird. Das Zeitguthaben kann dann wieder aufgeladen werden.

Aus der EP 1 072 979 A2 ist ein Verfahren zur Überwachung der Ablaufzeit einer Demo-Version einer Software bekannt, bei dem die Taktpulse der CPU gezählt werden, um die Ablaufzeit des Programmes zu bestimmen. Nach Ablauf der vorgesehenen Zeit wird der Programmablauf der Demo-Software unterbunden.

Ein Problem bei den beschriebenen Zugriffssteuerverfahren liegt darin, dass der Zeitzähler immer dann aktiviert ist, wenn das Programm geöffnet ist, unabhängig davon, ob und wie häufig der Benutzer dieses tatsächlich benutzt. Im Büroalltag, wo Programme typischerweise stundenlang geöffnet sind, aber nur Bruchteile dieser Zeit tatsächlich genutzt werden, kann dies zu einer wenig nutzerfreundlichen Zeitzugriffssteuerung führen.

Es besteht daher das Bedürfnis nach einem Verfahren zur Zugriffssteuerung, das den Zugriff auf ein auf einem lokalen Computer ablaufenden Anwendungsprogramm in Abhängigkeit einer tatsächlichen Programmnutzung, insbesondere einer Zeitbedingung, anwenderfreundlich und sicher steuert.

### Zusammenfassung der Erfindung

Der vorliegenden Erfindung liegt die Aufgabe zugrunde, ein Verfahren zur Steuerung des Zugriffs auf ein auf einem Computer ablaufenden Anwendungsprogramm vorzuschlagen, das den Zugriff in Abhängigkeit von der tatsächlichen Nutzung des Programms steuert, ohne dass dazu eine Datenübertragung von einem externen Server-Computer erforderlich ist.

Eine weitere Aufgabe der Erfindung liegt darin, ein Zugriffssteuerverfahren vorzuschlagen, das benutzerfreundlich ist und die Funktionsfähigkeit der sonstigen Anwendung auf den Computer nicht beeinträchtigt.

Noch eine weitere Aufgabe der vorliegenden Erfindung liegt darin, eine Aufwertungsprozedur für das Zugriffssteuerverfahren vorzuschlagen, die einerseits eine hohe Sicherheit für den Benutzer bietet und andererseits Umgehungsmöglichkeiten der Zugriffssteuerung verhindert.

Gelöst wird die Aufgabe durch ein Verfahren zur Steuerung des Zugriffs auf ein auf einem Computer oder Computernetzwerk ablaufenden Computerprogramm aufweisend die Schritte Starten des Anwendungsprogramms, Initialisierung eines Zeitfensterprozesses, welcher die Zustände "geöffnet" und "geschlossen" aufweisen kann, wobei nach Öffnen des Zeitfensters dieses nach Ablauf einer festgelegten Zeiteinheit automatisch in den Zustand "geschlossen" zurückkehrt, Erfassung eines Benutzer-Ereignisses auf dem Anwendungsprogramm und Erfassung, in welchem Zustand sich der Zeitfensterprozess befindet, und wenn der Zustand des Zeitfensterprozesses "offen" ist, Ausführung des Benutzer-Ereignisses, und wenn der Zustand des Zeitfensterprozesses "geschlossen" ist, Überprüfung, ob ein dem Anwendungsprogramm zugeordnetes Zeitguthaben einen festgelegten Schwellenwert überschreitet, und wenn ja, Versetzen des Zeitfensterprozesses in den Zustand geöffnet und Ausführung des Benutzer-Ereignisses, und wenn nein, Nichtausführung des Benutzer-Ereignisses.

Die Zugriffssteuerung erfolgt somit benutzungsabhängig gesteuert durch die Ablaufzeit des Anwendungsprogramms und erfordert keine Übertragung von Daten von einem externen Server-Computer. Da nur bestimmte Benutzer-Operationen als zugriffsbeschränkte Operationen bestimmt sind und andere Operationen weiter ausgeführt werden können, hat der Benutzer bei Ablauf der Zugriffsberechtigung nicht das Gefühl, der Computer sei "abgestürzt", so dass die Benutzungssteuerung anwenderfreundlich ist. Vorzugsweise kann der Ablauf des Zeitguthabens am Bildschirm des Computers angezeigt werden.

Dabei wird vorzugsweise eine Tastatur-Eingabe oder ein Mausklick oder dergleichen als Benutzer-Ereignis angesehen, während Betriebssystem-Steuerprozesse wie etwa ein Windows-Paint-Befehl als Steuerereignisse und somit nicht als Benutzer-Ereignis angesehen werden.

Die Dauer des Zeitfensters kann vorzugsweise 1 Minute betragen. Andere Zeitperioden, wie etwa 10 Sekunden, 30 Sekunden, 2 Minuten oder 10 Minuten, sind im Rahmen der Erfindung jedoch ebenso möglich.

Der Schritt des Initialisierens des Zeitfensterprozesses umfasst vorzugsweise das Setzen des Zustands auf "geschlossen".

Bei Erfassung eines abgelaufenen Zeitguthabens wird vorzugsweise eine Mitteilung an den Benutzer mit der Aufforderung ausgegeben, das Zeitguthaben aufzufüllen.

Im Falle eines längeren Programmablaufs ohne Benutzerintervention, beispielsweise bei längerdauernden Berechnungen, können Benutzer-Ereignisse simuliert werden, so dass die Zugriffssteuerung auch in diesen Fällen funktioniert.

Um ein unbeabsichtigtes Aufbrauchen des Zeitguthabens zu vermeiden, kann vorgesehen sein, das Anwendungsprogramm automatisch zu deaktivieren, wenn für eine festgelegte Zeitspanne, beispielsweise fünf Minuten, keine zugriffsbeschränkten Benutzer-Ereignisse erfasst werden. Eine manuelle Deaktivierung des Anwendungsprogramms ist selbstverständlich ebenfalls möglich.

Erfindungsgemäß ist außerdem zu dem Zugriffssteuerverfahren eine Prozedur der Aufwertung des Zeitguthabens vorgesehen, die die Schritte der Erfassung einer Hardware-Identifikation des Computers, der Erfassung einer Benutzer-Aufwertungsanforderung, der Erzeugung eines verschlüsselten Aufwertungsanforderungssignals enthaltend die Hardware-Identifikation und die Benutzer-Aufwertungsanforderung, des Sendens des verschlüsselten Aufwertungsanforderungssignals an eine Aufwertungsstelle, des Empfangs und der Entschlüsselung eines verschlüsselten Aufwertungssignals enthaltend einen Aufwertungsbetrag sowie eine Hardware-Identifikation, die Prüfung, ob die empfangene und entschlüsselte Hardware-Identifkation mit derjenigen des lokalen Computers übereinstimmt und der Aufwertung des Zeitguthabens entsprechend dem Aufwertungsbetrag umfasst.

Bevorzugterweise wird für jeden Aufwertungsvorgang eine eindeutige Kennung auf einer zugriffsgeschützten Speichereinheit des lokalen Computers abgespeichert, wobei bei jedem Aufwertungsvorgang überprüft wird, ob die Kennung bereits gespeichert ist. So kann ein Mißbrauch des Aufwertungsvorgangs durch mehrmalige Benutzung des Aufwertungssignals verhindert werden.

Bei der Hardware-Identifikation kann es sich beispielsweise um eine eindeutige CPU- oder Festplatten-Kennung des lokalen Computers handeln.

Die Erfindung schlägt ferner ein Computerprogrammprodukt enthaltend einen computer-lesbaren Programmcode vor, der bei Ablauf auf einem Computer das erfindungsgemäße Zugriffssteuerverfahren ausführt.

Erfindungsgemäß wird außerdem ein Computersystem mit geladenem Computerprogramm vorgeschlagen, der bei Ablauf des Computerprogrammes die Verfahrensschritte des erfindungsgemäßen Zugriffssteuerverfahrens ausführt.

### Kurze Beschreibung der Zeichnung

Die Erfindung wird im Folgenden anhand bevorzugter Ausführungsbeispiele unter Bezugnahme auf die beiliegenden Zeichnungen im Detail erläutert.
Figur 1 zeigt ein schematisches Flußdiagramm eines Ausführungsbeispiels des erfindungsgemäßen Verfahrens.
Figur 2 zeigt ein schematisches Blockdiagramm eines Computers, auf welchem das erfindungsgemäße Programm ablaufen kann.
Figur 3 zeigt ein schematisches Flussdiagramm eines Ausführungsbeispiels der erfindungsgemäßen Aufwertungsprozedur des Zugriffssteuerverfahrens.
Figur 4 zeigt schematisch die Bestellung und Lieferung eines Zeitguthabens.
Figur 5 zeigt schematisch die Meldung und Bestätigung einer Systemveränderung des Anwendungprogramms.
Figur 6 zeigt schematisch die Anwendung des Zeitguthabens für eine Hotline-Dienstleistung

### DETAILLIERTE BESCHREIBUNG DER ERFINDUNG

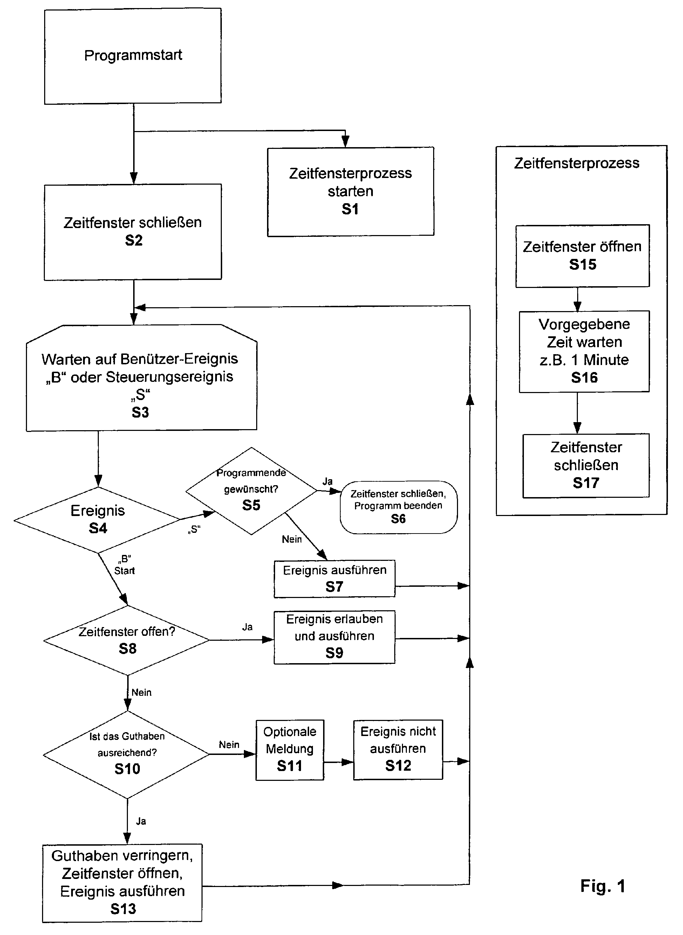

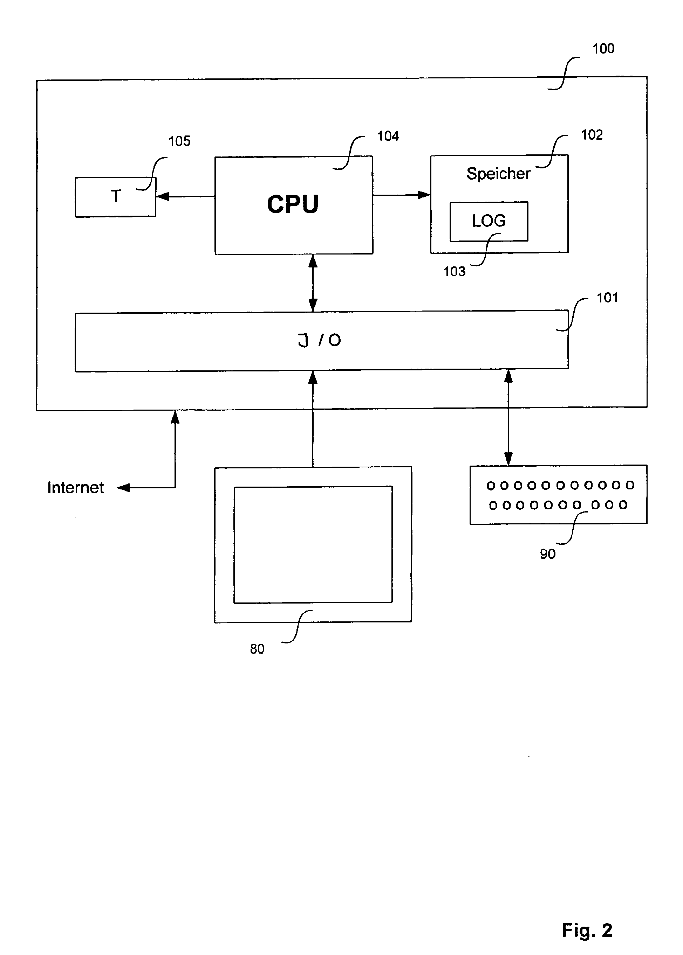

Die Fig. 1 zeigt ein schematisches Flußdiagramm eines Ausführungsbeispiels des erfindungsgemäßen Verfahrens zur Steuerung des Zugriffs auf ein auf einem Computer oder einem Computernetzwerk ablaufenden Anwendungsprogramm. Bei dem Computer kann es sich um einen Universalcomputer handeln, wie er beispielsweise schematisch in Fig. 2 illustriert ist. Der Computer 100 weist eine Zentralsteuereinheit (CPU) 104, eine Speichereinrichtung 102, die sowohl Arbeitsspeicher als auch Festwertspeicher wie eine Festplatte oder dergleichen umfassen kann sowie eine I/O-Schnittstelle 101 auf. Die Schnittstelle stellt eine Verbindung her zu Eingabegeräten wie einer Tastatur 90, einer Maus (nicht dargestellt), Spracheingabegeräten oder dergleichen sowie zu Ausgabegeräten wie beispielsweise einem Bildschirm 80. Über die l/O-Schnittstelle läßt sich von dem Computer 100 außerdem eine Verbindung zum Internet oder anderen Kommunikationsnetzwerken herstellen.

Erfindungsgemäß weist der Computer 100 ein Zeitsteuersystem 105 sowie einen LOG-Speicher 103 auf, der zugriffsgeschützt ist, zur Speicherung von (später erläuterten) Aufwertungskennungen. Die Erfindung ist nicht auf die in Fig. 2 gezeigte Konfiguration beschränkt, sondern ist auf verschiedenste Computersysteme und -netzwerke mit einer oder mehreren CPUs anwendbar.

Die Erfindung dient der Steuerung des Zugriffs auf ein auf einem solchen Computer ablaufenden Anwendungsprogramm. Bei diesem kann es sich um ein beliebiges Programm, beispielsweise ein CAD-Programm, ein Textverarbeitungsprogramm, ein Buchhaltungsprogramm usw. handeln.

Nach dem Start des Anwendungsprogramms wird in Verfahrensschritt S1 ein separater Prozess, der Zeitfensterprozess, gestartet. Der Zeitfensterprozess kennt zwei Zustände, nämlich dass das Zeitfenster "offen" und "geschlossen" ist. Wird im Zeitfensterprozess das Zeitfenster geöffnet, so läuft ein Zählprozess über eine festgelegte Zeitdauer ab, der das Zeitfenster für diese vorgegebene Zeitdauer von beispielsweise 1 Minute, 30 Sekunden, 2 Minuten etc. geöffnet hält und nach Zeitablauf wieder schließt. Der Zeitfensterprozess ist in Figur 1 auf der rechten Seite illustriert, wobei das Zeitfenster in Verfahrensschritt S15 geöffnet wird, dann für eine vorgegebene Zeitdauer von beispielsweise 1 Minute im Verfahrensschritt S16 geöffnet bleibt und in Verfahrensschritt S17 nach Zeitablauf automatisch geschlossen wird.

In Verfahrensschritt S2 wird der Zeitfensterprozess initialisiert, d.h. beispielsweise das Zeitfenster geschlossen. Im anschließenden Verfahrensschritt S3 wartet das Zugriffssteuersystem auf ein Benutzer-Ereignis "B" oder ein Steuerereignis "S". Ein Benutzer-Ereignis ist eine Benutzer-Eingabe beispielsweise über die Tastatur, die Maus, eine Sprachsteuerung, oder dergleichen. Bei Steuerungsereignissen handelt es sich um Steuerungsbefehle an das Betriebssystem oder von dem Betriebssystem ohne Benutzerintervention.

Tritt im Programmablauf ein Steuerungsereignis "S" auf, so bleibt das Zeitsteuerungssystem davon unberührt mit der Ausnahme, wenn das Programmende gewünscht wird (Schritt S5). In diesem Fall wird das Zeitfenster geschlossen und das Programm beendet.

Tritt ein Benutzer-Ereignis "B" auf, so wird in Schritt S8 erfasst, ob der Zeitfensterprozess im Zustand "offen" ist, d.h. ob das Zeitfenster offen ist. Ist dies der Fall, so wird das Ereignis zugelassen und ausgeführt (Schritt S9).

Ist kein Zeitfenster offen, so wird in Schritt S10 überprüft, ob ein Zeitguthaben vorhanden ist. Ist dies nicht der Fall, so wird in Schritt S11 der Benutzer davon unterrichtet und das Benutzer-Ereignis wird nicht ausgeführt (Schritt S12).

Ist das Guthaben dagegen ausreichend, wird in Verfahrensschritt S13 das Guthaben um die Zeitdauer des Zeitfensters (in diesem Beispielsfall 1 Minute) verringert, das Zeitfenster geöffnet und das Benutzer-Ereignis ausgeführt.

Folgen daher mehrere Benutzer-Ereignisse in kurzer Folge aufeinander, so braucht nicht jedesmal ein neues Zeitfenster geöffnet zu werden und die tatsächliche Benutzung des Anwendungsprogramms wird vom Zeitguthaben abgebucht.

Benutzt der Benutzer das Anwendungsprogramm jedoch nur sporadisch, treten Benutzer-Ereignisse selten auf und es wird für jedes Benutzer-Ereignis nur die Zeitdauer eines Zeitfensters, beispielsweise 1 Minute oder auch 30 Sekunden oder eine geeignete Zeitdauer vom Zeitguthaben abgebucht. Dadurch kann eine anwenderfreundliche, an der tatsächlichen Programmnutzung orientierte Zugriffssteuerung und Programmabrechnung ermöglicht werden.

Ein weiterer Vorteil des Zeitsteuerverfahrens liegt darin, dass bei Ablaufen des Zeitguthabens nur Benutzer-Ereignisse unterbunden werden und es weiterhin möglich ist, beispielsweise den Cursor über den Bildschirm zu bewegen oder auch, das Programm ordnungsgemäß zu beenden. Dadurch hat der Benutzer, wenn das Zeitguthaben abgelaufen ist, nicht das Gefühl, der Computer sei "abgestürzt". Die erfindungsgemäße Lösung zeichnet sich daher durch eine hohe Benutzerfreundlichkeit aus.

Mit dem erfindungsgemäßen Zugriffssteuerverfahren kann so der Zugriff auf das Anwendungsprogramm in Abhängigkeit von dem Zeitguthaben gesteuert werden, ohne dass andere Anwendungen des Computers beeinträchtigt werden und ohne dass Daten von einem externen System, beispielsweise einem Server, übertragen werden müssen.

Gemäß einer Variante der Erfindung wird das Anwendungsprogramm automatisch deaktiviert, wenn für eine festgelegte Zeitspanne, beispielsweise fünf Minuten, keine zugriffsbeschränkten Benutzer-Ereignisse erfasst werden. Umgekehrt kann vorgesehen sein, dass virtuelle zugriffsbeschränkte Benutzer-Ereignisse in regelmäßigen Abständen erzeugt werden, wenn das Anwendungsprogramm eine längere Aufgabe, beispielsweise eine Berechnung, ausführt, die keine Benutzerintervention erfordert. So wird sichergestellt, dass die Programmnutzung ohne Benutzerintervention ordnungsgemäß vom Zeitguthaben abgebucht wird.

Vorzugsweise wird das aktuelle Zeitguthaben und/oder der Zustand des Zeitfensterprozesses kontinuierlich auf dem Bildschirm angezeigt. Dabei kann ein Farbcode vorgesehen sein, der den Zustand des Zeitfensterprozesses angibt. Die Anzeige eines Uhrensymbols kann beispielsweise in Rot dargestellt werden, wenn das Zeitfenster offen ist und die Zeit vom Zeitguthaben abgezogen wird.

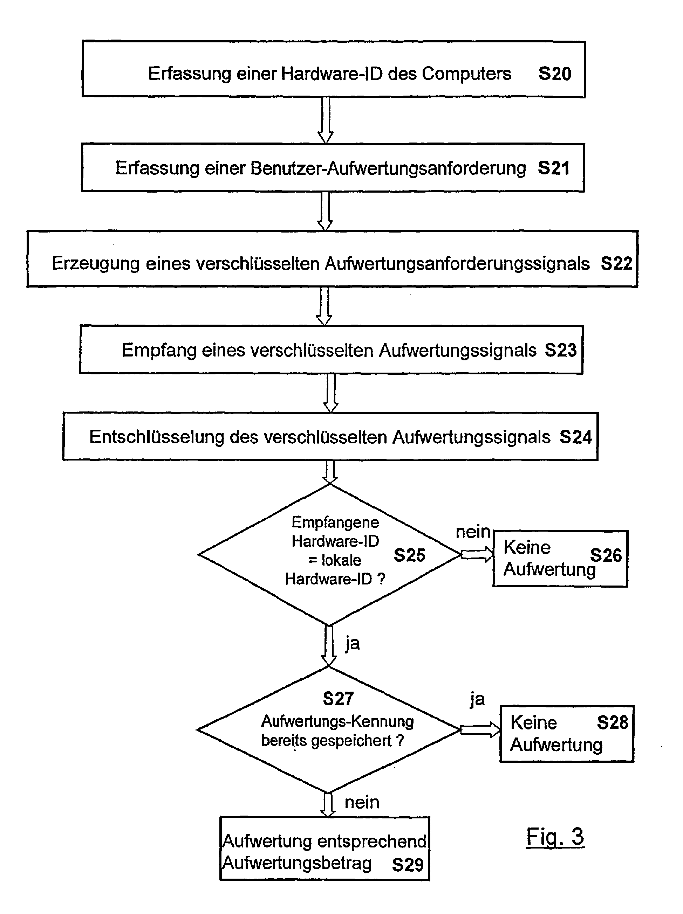

Fig. 3 zeigt ein schematisches Flußdiagramm eines Ausführungsbeispiels einer Aufwertungsprozedur des erfindungsgemäßen Zugriffssteuerverfahrens.

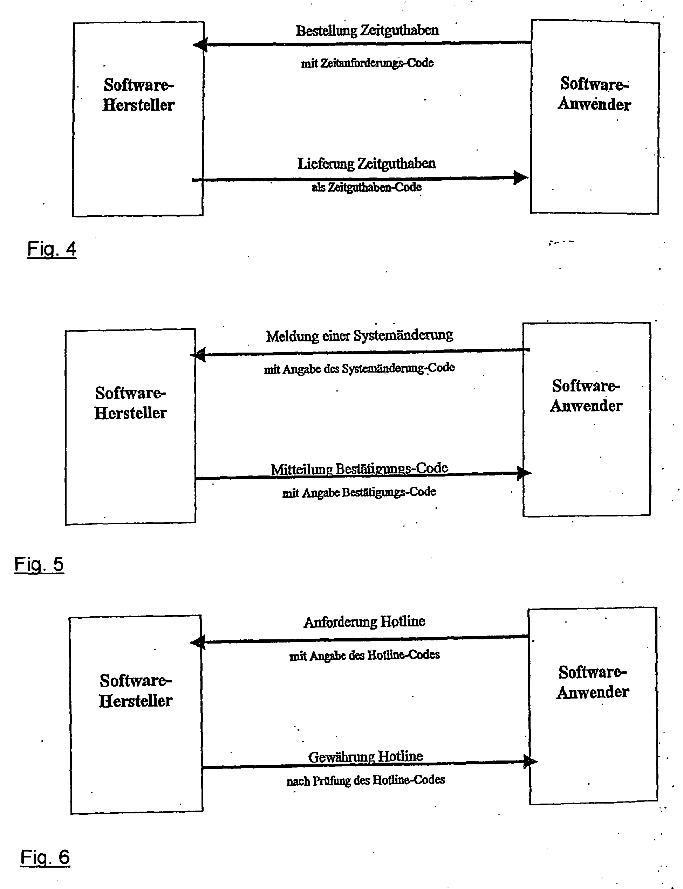

Zunächst wird in Verfahrensschritt S20 eine Hardware-Identifikation, beispielsweise eine eindeutige CPU- oder Festplattennummer des Computersystems erfasst, auf dem das Anwendungsprogramm abläuft. Dann wird im Verfahrensschritt S21 eine Benutzer-Aufwertungsanforderung erfasst, beispielsweise die Verlängerung der Nutzungszeit um 20 Stunden. Aus der Hardware-ID und der Benutzer-Aufwertungsanforderung wird ein verschlüsselter Anforderungscode erzeugt und als Aufwertungsanforderungssignal an eine Aufwertungsstelle, beispielsweise den Softwarehersteller, übersandt (Schritt S22). Dieser überprüft die Aufwertungsanforderung des Anwenders oder Kunden, bucht beispielsweise den Geldbetrag für die 20 weiteren Anwendungsstunden des Programms von einem dafür vorgesehenen Konto ab und erzeugt wiederum einen verschlüsselten Antwort-Code, der die Hardware-ID des Benutzers und das Zeitguthaben in verschlüsselter Form enthält. Der Vorgang der Bestellung und Lieferung des Zeitguthabens ist schematisch in Fig. 4 illustriert.

Im darauffolgenden Verfahrensschritt S24 in Fig. 3 wird das Aufwertungssignal entschlüsselt und anschließend im Schritt S25 die entschlüsselte Hardware-ID mit der lokalen Hardware-ID des Benutzersystems verglichen. Stimmen beide Identifikationsnummern nicht überein, so kann die Aufwertung nicht vorgenommen werden. Dadurch wird sichergestellt, dass das Aufwertungsguthaben nur dem Benutzer zugute kommt, der die Anforderung gestellt hat und von dessen Konto die Aufwertung abgebucht wird.

In einem darauffolgenden Verfahrensschritt S27 wird eine eindeutige Kennung dieses Aufwertungsvorgangs erzeugt und in einem zugriffsgesicherten LOG-Speicherbereich 103 (Fig. 2) des Anwender-Computers abgespeichert. Gleichzeitig wird überprüft, ob die Aufwertungs-Kennung bereits im LOG-Speicher vorhanden ist. Ist dies der Fall (weil der Anwender beispielsweise das gleiche Aufwertungssignal zweimal verwenden wollte), wird die Aufwertung in Schritt S28 verweigert. Wird die neu erzeugte eindeutige Kennung im LOG-Speicher nicht gefunden, wird im Schritt S29 das Zeitguthaben des Anwenders des Anwendungsprogramms entsprechend dem Aufwertungsbetrag aufgewertet.

Das Zeitguthaben ist dabei beispielsweise auf den PC beschränkt, an dem der Zeitanforderungs-Code erstellt wurde. Um dem Kunden die Möglichkeit zu geben, das Zeitguthaben z.B. bei der Anschaffung eines neuen PC weitere nutzen zu können, kann eine Systemänderungs-Funktion vorgesehen sein, die schematisch in Fig. 5 gezeigt ist. Mit einem Systemänderungs-Code wird eine Systemänderung verschlüsselt der Aufwertungsstelle, d.h. beispielsweise dem Softwarehersteller übermittelt. Dieser prüft die Anfrage und sendet einen Bestätigungs-Code, der es dem Anwender erlaubt, das Zeitguthaben auf einen neuen PC mit neuer Hardware-ID zu übertragen.

Weiterhin ist es möglich, mit dem Zeitguthaben auch Dienstleistungen zu dem Anwendungsprogramm wie beispielsweise einen Hotline-Service abzurechnen. Über eine Funktion "Hotline-Code erzeugen" der Zugriffssteuerung erzeugt der Anwender einen Hotline-Code. Mit Erzeugung dieses Codes wird dem Kunden das Zeitguthaben um einen vertraglich festgelegten Wert gekürzt. Der Anwender kann dann Kontakt mit der Anwendungsberatung (Hotline) des Software-Herstellers aufnehmen und teilt dabei den Hotline-Code mit. Dies wird vom Software-Hersteller geprüft und bei erfolgreicher Prüfung die Hotline-Dienstleistung gewährt.

Mit der Erfindung können folgende Vorteile realisiert werden:

Der Zugriff auf ein Anwendungsprogramm kann minuten- oder sekundengenau gemäß der tatsächlichen aktiven Nutzung des Programms gesteuert und mittels des Zeitguthabens abgerechnet werden. Ein lediglich geöffnetes oder nicht aktiv benutztes Programm belastet das Zeitguthaben nicht. Dabei ist im Gegensatz zu ASP-Lösungen kein Zugang zum Internet erforderlich, wodurch die Verfügbarkeit der Programmanwendung nicht von der Verfügbarkeit der Internetanbindung abhängig ist. Gefahren durch Viren oder dergleichen können so ausgeschlossen werden.

Die Zugriffssteuerung auf das Anwendungsprogramm beeinträchtigt nicht die Lauffähigkeit des Betriebssystems oder anderer Anwendungsprogramme des Computers.

Eine sichere Auswertungsprozedur des Zeitguthabens ermöglicht eine gefahrlose Benutzungsabrechnung der Programmnutzung über längere Zeiträume.

Mit dem Zeitguthaben und der Aufwertungsprozedur können auch zugehörige Dienstleistungen wie ein Hotline-Service einfach und sicher (ohne die Verwendung von Mehrwertnummern wie 0190) abgerechnet werden.

## Patentansprüche

1. Verfahren zur Steuerung des Zugriffs auf ein auf einem Computer oder Computernetzwerk ablaufendes Anwendungsprogramm, aufweisend die Schritte:
- Starten des Anwendungsprogramms,
- Initialisierung eines Zeitfensterprozesses, welcher die Zustände "geöffnet" und "geschlossen" aufweisen kann, wobei nach Öffnen des Zeitfensters dieses nach Ablauf einer festgelegten Zeiteinheit automatisch in den Zustand "geschlossen" zurückkehrt,
- Erfassung eines Benutzer-Ereignisses auf dem Anwendungsprogramm und Erfassung, in welchem Zustand sich der Zeitfensterprozess befindet,
- wenn der Zustand des Zeitfensterprozesses "offen" ist, Ausführung des Benutzer-Ereignisses,
- wenn der Zustand des Zeitfensterprozesses "geschlossen" ist, Überprüfung, ob ein dem Anwendungsprogramm zugeordnetes Zeitguthaben einen festgelegten Schwellenwert überschreitet, und
- wenn ja, Versetzen des Zeitfensterprozesses in den Zustand "offen" und Ausführung des Benutzer-Ereignisses,
- wenn nein, Nichtausführung des Benutzer-Ereignisses.

2. Verfahren nach Anspruch 1, wobei Benutzer-Ereignisse eine Tastatur-Eingabe oder ein Mausklick des Benutzers sind.

3. Verfahren nach Anspruch 1 oder 2, wobei Betriebssystem-Steuerbefehle keine Benutzer-Ereignisse sind.

4. Verfahren nach einem der Ansprüche 1 bis 3, wobei die festgelegte Zeiteinheit des Zustandes "offen" des Zeitfensters eine Minute beträgt.

5. Verfahren nach einem der Ansprüche 1 bis 4, wobei der Schritt des Initialisierens des Zeitfensterprozesses das Setzen des Zeitfensters in den Anfangszustand "geschlossen" umfasst.

6. Verfahren nach einem der Ansprüche 1 bis 5, umfassend den Verfahrensschritt der Mitteilung und Aufforderung an den Benutzer, das Zeitguthaben aufzufüllen, wenn erfasst wurde, dass das dem Anwendungsprogramm zugeordnete Zeitguthaben den festgelegten Schwellenwert nicht überschreitet.

7. Verfahren nach einem der Ansprüche 1 bis 6, wobei der festgelegte Schwellenwert des Zeitguthabens Null ist.

8. Verfahren nach einem der Ansprüche 1 bis 7, umfassend den Verfahrensschritt der Simulation eines Benutzer-Ereignisses bei längerem Programmablauf des Anwendungsprogramms ohne Benutzerintervention.

9. Verfahren nach einem der Ansprüche 1 bis 8, wobei das Anwendungsprogramm manuell deaktivierbar ist.

10. Verfahren nach einem der Ansprüche 1 bis 8, aufweisend den Schritt der automatischen Deaktivierung des Anwendungsprogramms, wenn für eine festgelegte Zeitspanne keine zugriffsbeschränkten Benutzer-Ereignisse erfasst werden.

11. Verfahren nach einem der Ansprüche 1 bis 10, wobei das Zeitguthaben und/oder der Zustand des Zeitfensterprozesses auf dem Bildschirm angezeigt wird.

12. Verfahren nach einem der Ansprüche 1 bis 11, aufweisend die Prozedur der Aufwertung des Zeitguthabens enthaltend die Schritte:
- Erfassung einer Hardware-Identifikation des Computers oder Computer-Netzwerkes,
- Erfassung einer Benutzer-Aufwertungsanforderung,
- Erzeugung eines verschlüsselten Aufwertungsanforderungssignals enthaltend die Hardware-Identifikation und die Benutzer-Aufwertungsanforderung,
- Senden des verschlüsselten Aufwertungsanforderungssignals an eine Aufwertungsstelle,
- Empfang und Entschlüsselung eines verschlüsselten Aufwertungssignals enthaltend einen Aufwertungsbetrag sowie eine Hardware-Identifikation,
- Prüfung, ob die empfangene und entschlüsselte Hardware-Identifikation mit der Hardware-Identifikation des Computers übereinstimmt, und
- Aufwertung des Zeitguthabens entsprechend dem Aufwertungsbetrag.

13. Verfahren nach Anspruch 12, wobei der Schritt der Aufwertung des Zeitguthabens den Schritt der Abspeicherung einer eindeutigen Kennung des Aufwertungsvorgangs auf einer zugriffsgeschützten Speichereinheit und der Überprüfung der Speichereinheit umfasst, ob diese eindeutige Kennung bereits gespeichert ist.

14. Verfahren nach Anspruch 12 oder 13, wobei die Hardware-Identifikation eine Kennung der CPU oder der Festplatte des Computers ist.

15. Verfahren nach einem der Ansprüche 1 bis 14, welches die Erfassung und Aktualisierung mehrerer Zeitguthaben für mehrere Benutzer auf einem Einzelcomputer oder einem Computernetzwerk umfasst.

16. Verfahren nach einem der Ansprüche 1 bis 15, wobei das Zeitguthaben auch zur Abrechnung von Hotline-Dienstleistungen verwendet wird.

17. Computerprogrammprodukt enthaltend computer-lesbaren Programmcode, der, wenn das Programm auf einem Computer abläuft, die Verfahrensschritte gemäß einem der Ansprüche 1 bis 16 ausführt.

18. Computersystem (100) aufweisend eine Zentralrecheneinheit (104), einen Arbeitsspeicher (102), einen Festwertspeicher (102), eine Anzeigeeinrichtung (80) sowie Eingabemittel (90), wobei im Arbeitsspeicher ein Computerprogramm geladen ist, enthaltend computer-lesbaren Programmcode, der, wenn das Programm auf dem Computer abläuft, die Verfahrensschritte gemäß einem der Ansprüche 1 bis 16 ausführt.

## Claims

1. Method for controlling access to an application program running on a computer or computer network, including the steps of:
- starting the application program,
- initialising a time window process which can include the states "opened" and "closed", wherein the time window, once opened, automatically returns to the state "closed" once a defined unit of time has elapsed,
- detecting a user event on the application program and detecting the state of the time window process,
- if the state of the time window process is "open", carrying out the user event,
- if the state of the time window process is "closed", checking whether a time credit associated with the application program exceeds a defined threshold value, and
- if it does, placing the time window process in the state "open" and carrying out the user event,
- if it does not, not carrying out the user event.

2. Method according to claim 1, wherein the user events are a keyboard input or a mouse click on the part of the user.

3. Method according to either claim 1 or claim 2, wherein operating system control commands are not user events.

4. Method according to any one of claims 1 to 3, wherein the defined unit of time of the state "open" of the time window is one minute.

5. Method according to any one of claims 1 to 4, wherein the step of initialising the time window process includes setting the time window into the initial state "closed".

6. Method according to any one of claims 1 to 5, including the method step of notifying and prompting the user to top up the time credit if it has been detected that the time credit associated with the application program does not exceed the defined threshold value.

7. Method according to any one of claims 1 to 6, wherein the defined threshold value of the time credit is zero.

8. Method according to any one of claims 1 to 7, including the method step of simulating a user event if the application program runs for a relatively long time without the user intervening.

9. Method according to any one of claims 1 to 8, wherein the application program can be deactivated manually.

10. Method according to any one of claims 1 to 8, including the step of automatically deactivating the application program if no access-restricted user events are detected for a defined period of time.

11. Method according to any one of claims 1 to 10, wherein the time credit and/or the state of the time window process is displayed on the screen.

12. Method according to any one of claims 1 to 11, including the procedure of topping up the time credit involving the steps of:
- detecting a hardware identification of the computer or computer network,
- detecting a user top-up request,
- generating an encrypted top-up request signal containing the hardware identification and the user top-up request,
- sending the encrypted top up request signal to a top-up station,
- receiving and decrypting an encrypted top-up signal containing a top-up sum and a hardware identification,
- checking whether the received and decrypted hardware identification corresponds to the hardware identification of the computer, and
- topping up the time credit in accordance with the top-up sum.

13. Method according to claim 12, wherein the step of topping up the time credit includes the step of saving an unambiguous identifier of the top-up process to an access-protected storage unit and checking the storage unit to establish whether this unambiguous identifier has already been stored.

14. Method according to either claim 12 or claim 13, wherein the hardware identification is an identifier of the CPU or the hard disk of the computer.

15. Method according to any one of claims 1 to 14, which includes detecting and updating a plurality of time credits for a plurality of users on an individual computer or a computer network.

16. Method according to any one of claims 1 to 15, wherein the time credit is also used for the billing of hotline services.

17. Computer program product containing a computer-readable program code which, when the programme is running on a computer, carries out the method steps according to any one of claims 1 to 16.

18. Computer system (100) having a central computing unit (104), a random access memory (102), a read-only memory (102), a display means (80) and input means (90), wherein there is loaded in the random access memory a computer program containing a computer-readable program code which, when the programme is running on the computer, carries out the method steps according to any one of claims 1 to 16.

## Revendications

1. Procédé pour commander l'accès à un programme d'application se déroulant sur un ordinateur ou un réseau d'ordinateur, comportant les étapes de :
- démarrage du programme d'application,
- initialisation d'un processus de fenêtre temporelle, lequel processus peut comprendre les états « ouvert » et « fermé », où après l'ouverture de la fenêtre temporelle celle-ci, après le déroulement d'une unité de temps définie, revient automatiquement dans l'état « fermé »,
- enregistrement d'un événement utilisateur sur le programme d'application et enregistrement de l'état dans lequel se trouve le processus de fenêtre temporelle,
- lorsque l'état du processus de fenêtre temporelle est « ouvert », exécution de l'événement utilisateur,
- lorsque l'état du processus de fenêtre est « fermé », vérification si un crédit de temps associé au programme d'application est supérieur à une valeur seuil définie,
- si c'est le cas, modification du processus de fenêtre temporelle pour passer dans l'état « ouvert » et exécution de l'événement utilisateur,
- si ce n'est pas le cas, non exécution de l'événement utilisateur.

2. Procédé selon la revendication 1, dans lequel les événements utilisateur sont une entrée au clavier ou un clic de souris par l'utilisateur.

3. Procédé selon la revendication 1 ou 2, dans lequel les instructions de commande du système d'exploitation ne sont pas des événements utilisateur.

4. Procédé selon l'une des revendications 1 à 3, dans lequel l'unité de temps définie de l'état « ouvert » de la fenêtre temporelle est d'une minute.

5. Procédé selon l'une des revendications 1 à 4, dans lequel l'étape d'initialisation du processus de fenêtre temporelle comprend l'établissement de la fenêtre temporelle dans l'état de début « fermé ».

6. Procédé selon l'une des revendications 1 à 5, comprenant l'étape de procédé de communication et d'invitation de l'utilisateur à remplir le crédit de temps une fois qu'il a été enregistré que le crédit de temps associé au programme d'application ne dépasse pas la valeur seuil définie.

7. Procédé selon l'une des revendications 1 à 6, dans lequel la valeur seuil définie du crédit de temps est nulle.

8. Procédé selon l'une des revendications 1 à 7, comprenant l'étape de procédé de simulation d'un événement utilisateur dans le cas d'un déroulement de programme du programme d'application plus long sans intervention utilisateur.

9. Procédé selon l'une des revendications 1 à 8, dans lequel le programme d'application peut être désactivé de façon manuelle.

10. Procédé selon l'une des revendications 1 à 8, comportant l'étape de désactivation automatique du programme d'application lorsque pour un intervalle de temps défini il n'a pas été enregistré d'événements utilisateur limités en accès.

11. Procédé selon l'une des revendications 1 à 10, dans lequel le crédit de temps et/ou l'état du processus de fenêtre temporelle est affiché sur l'écran.

12. Procédé selon l'une des revendications 1 à 11, comportant la procédure de valorisation du crédit de temps comprenant les étapes de :
- enregistrement d'une identification en rapport avec le matériel de l'ordinateur ou du réseau d'ordinateur,
- enregistrement d'une requête de valorisation utilisateur,
- génération d'un signal de requête de valorisation crypté contenant l'identification en rapport avec le matériel et la requête de valorisation utilisateur,
- envoi du signal de requête de valorisation crypté à un point de valorisation,
- réception et décryptage d'un signal de valorisation crypté contenant une quantité de valorisation ainsi qu'une identification en rapport avec le matériel,
- vérification pour déterminer si l'identification en rapport avec le matériel reçue et décryptée concorde avec l'identification en rapport avec le matériel de l'ordinateur, et
- valorisation du crédit de temps en correspondance avec la quantité de valorisation.

13. Procédé selon la revendication 12, dans lequel l'étape de valorisation du crédit de temps comprend l'étape d'extraction de la mémoire d'un identificateur sans équivoque de l'opération de valorisation sur une unité de mémoire protégée en accès et de vérification de l'unité de mémoire pour vérifier si cet identificateur sans équivoque est déjà stocké ou non.

14. Procédé selon la revendication 12 ou 13, dans lequel l'identification en rapport avec le matériel est un identificateur de la CPU ou du disque dur de l'ordinateur.

15. Procédé selon l'une des revendications 1 à 14, lequel comprend l'enregistrement et l'actualisation de plusieurs crédits de temps pour plusieurs utilisateurs sur un ordinateur individuel ou un réseau d'ordinateur.

16. Procédé selon l'une des revendications 1 à 15, dans lequel le crédit de temps est utilisé également pour la facturation de services d'assistance en ligne.

17. Produit de programme ordinateur contenant un code de programme lisible par ordinateur, lequel, lorsque le programme est déroulé sur un ordinateur, exécute les étapes de procédé selon l'une des revendications 1 à 16.

18. Système ordinateur (100) comportant une unité de traitement centrale (104), une mémoire de travail (102), une mémoire morte (102), un dispositif d'affichage (80) ainsi qu'un moyen d'entrée (90), dans lequel un programme d'ordinateur est chargé dans la mémoire de travail, lequel comprend des codes de programme lisibles par ordinateur qui, lorsque le programme est déroulé sur l'ordinateur, exécutent les étapes de procédé selon l'une des revendications 1 à 16.
